# EUROPÄISCHE PATENTSCHRIFT

(11) **EP 3 947 111 B1**
(45) Veröffentlichungstag und Bekanntmachung des Hinweises auf die Patenterteilung: **29.05.2024**
(21) Anmeldenummer: 20712528.7
(22) Anmeldetag: 17.03.2020
(51) Int. Cl.: B62D 13/02, B62D 13/04

(54) **SCHWERLASTFAHRZEUG**
HEAVY-DUTY VEHICLE
VÉHICULE POIDS LOURDS

(30) Priorität: 29.03.2019 DE 102019204442
(43) Veröffentlichungstag der Anmeldung: 09.02.2022
(73) Patentinhaber: Goldhofer AG, 87700 Memmingen (DE)
(72) Erfinder: HÄFELE, Horst, Babenhausen 87727 (DE)
(74) Vertreter: Weickmann & Weickmann PartmbB
(86) Internationale Anmeldenummer: PCT/EP2020/057312
(87) Internationale Veröffentlichungsnummer: WO 2020/200772

(56) Entgegenhaltungen:
- EP-B1- 2 674 349
- GB-A- 2 154 521
- GB-A- 2 396 141
- US-A- 3 690 698
- US-A- 4 212 483

## Beschreibung

Die Erfindung betrifft ein Schwerlastfahrzeug gemäß dem Oberbegriff des Anspruchs 1.

Es sei an dieser Stelle darauf hingewiesen, dass das Schwerlastfahrzeug sowohl ein motorisch angetriebenes Schwerlastfahrzeug als auch ein gezogenes Schwerlastfahrzeug sein kann, beispielsweise ein Schwerlastanhänger oder, wie es im Anhang XI zur EG-Richtlinie 2007-46-EG in der Fassung vom 15.07.2011 heißt, ein "Anhänger für Schwerlasttransporte", also gemäß der dort gegebenen Definition dieses Begriffs ein Fahrzeug der Klasse O4 für den Transport von teilbaren und unteilbaren Ladungen (beispielsweise Baumaschinen, Behälter und Rotorflügel von Windkraftanlagen), die aufgrund ihrer Abmessungen Geschwindigkeits- und Verkehrsbeschränkungen unterliegen, wobei hierzu auch modulare Anhänger zählen, unabhängig von der Anzahl der Achsen und Module. Ferner ist festzuhalten, dass auch bei den motorisch angetriebenen Schwerlastfahrzeugen nicht jede der Achsbaugruppen motorisch angetrieben zu sein braucht.

Darüber hinaus werden nur solche Fahrzeuge als Schwerlastfahrzeuge im Sinne der vorliegenden Erfindung angesehen, bei denen die Last, für die jede einzelne Achsbaugruppe ausgelegt zu sein hat, einen Wert von mindestens 4 t, vorzugsweise mindestens 5 t, noch bevorzugter mindestens 6 t aufweist.

Derartige Schwerlastfahrzeuge weisen in Abhängigkeit von der jeweils zu transportierenden Last häufig eine große Anzahl von Achsbaugruppen auf, was wiederum eine große Länge des Schwerlastfahrzeugs nach sich zieht. Zudem kann die Länge des Schwerlastfahrzeugs von Einsatz zu Einsatz unterschiedlich sein, beispielsweise kann sie mittels eines teleskopierbaren Mittellängsträgers oder durch Anordnung einer Ladebrücke oder dergleichen weiterer Komponenten veränderbar sein. Die große Länge erschwert es, die einzelnen Achsbaugruppen bei der Kurvenfahrt auf den jeweils optimalen Lenkdrehwinkel um die Lenkachse einzustellen.

Aus dem Stand der Technik sind Schwerlastfahrzeuge bekannt, welche Vorrichtungen aufweisen, um eine relative Rotation zwischen zwei Fahrzeugelementen, wie beispielsweise einer Sattelzugmaschine und einem Sattelauflieger, unter Verwendung eines einstellbaren Übersetzungsverhältnisses an eine Lenkeinrichtung weiterzugeben. Beispielsweise offenbart die EP 2 674 349 B1 eine Lenkplatte, welche mit einer Sattelkupplung der Sattelzugmaschine drehfest verbunden ist, und mit welcher eine längenveränderbare Stelleinheit fest verbunden ist, an deren freiem Ende ein Lenkaktuator zur Verbindung mit einer Lenkeinrichtung angeordnet ist. Dadurch, dass hier die längenveränderbare Stelleinheit fest mit der Lenkplatte verbunden ist, ist die Auslegung der Stelleinheit, zum Beispiel in Bezug auf ihre Größe, stark eingeschränkt. Ferner sind hierdurch vorteilhafte Weiterbildungen nicht oder nur unter großem konstruktivem Aufwand möglich, wie beispielsweise das Vorsehen mehrerer Lenkeinrichtungen.

Die Druckschrift GB 2 154 521 A offenbart ein Schwerlastfahrzeuggemäß dem Oberbegriff des Anspruchs 1. Ferner wird auf die Druckschriften US 4 212 483 A, GB 2 396 141 A und US 3 690 698 A hingewiesen.

Es ist daher die Aufgabe der vorliegenden Erfindung, ein Schwerlastfahrzeug bereitzustellen, welches über eine vereinfachte und besser weiterzubildende Übertragung eines Lenkwinkels eines ersten Fahrzeugteils an eine Lenkeinrichtung eines zweiten Fahrzeugteils verfügt.

Diese Aufgabe wird erfindungsgemäß durch ein Schwerlastfahrzeug nach Anspruch 1 gelöst.

Die Lenkeinrichtung kann dabei an den Verbindungsabschnitten mit der Lenkeinheit gelenkig verbunden sein, so dass beispielsweise eine Rotation der Lenkeinheit zunächst eine im Wesentlichen axiale Verlagerung des an der Lenkeinheit angebrachten Abschnitts der Lenkeinrichtung hervorruft. Bei einer weiteren Rotation der Lenkeinheit werden die an den Verbindungsabschnitten angeordneten Abschnitte der Lenkeinrichtung natürlich ebenfalls eine rotatorische Verlagerung erfahren können.

Insbesondere kann es durch das erfindungsgemäße Schwerlastfahrzeug ermöglicht werden, einen durch den Lenkgeber in die Lenkeinheit eingegebenen Lenkwinkel unter Verwendung der längenveränderbaren Stelleinheit in einem variablen Übersetzungsverhältnis auf eine der längenveränderbaren Stelleinheit zugeordnete Lenkeinrichtung zu übertragen. In anderen Worten ist die längenveränderbare Stelleinheit dazu eingerichtet, ein Verhältnis, in welchem eine Rotation der Lenkeinheit eine Verlagerung, das heißt eine Lenkung, der Lenkeinrichtung bewirkt, durch Längenänderung der längenveränderbaren Stelleinheit zu verändern.

Es sei ferner erwähnt, dass der Lenkgeber hierbei auf unterschiedliche Weisen einen Lenkwinkel in die Lenkeinheit eingeben kann. So kann der Lenkgeber mit einem ersten Fahrzeugteil ortsfest verbunden sein, welches sich relativ zu einem zweiten Fahrzeugteil dreht, an welchem die Lenkeinheit und/oder die Lenkeinrichtung angeordnet ist/sind. Es ist aber auch denkbar, dass der Lenkgeber einen Aktuator umfasst, welcher ein, zum Beispiel elektrisches, Signal in eine Betätigung des Aktuators und somit eine Rotation der Lenkeinheit umsetzen kann. In dem letzten Fall kann beispielsweise auf ein Element, welches mit dem ersten Fahrzeugteil drehfest und mit dem zweiten Fahrzeugteil drehbar verbunden ist, verzichtet werden.

Die längenveränderbare Stelleinheit kann sowohl dazu eingerichtet sein, den ihr zugeordneten wenigstens einen Verbindungsabschnitt stufenlos als auch in einer gestuften Weise zu verlagern. So kann es beispielsweise denkbar sein, dass der relativ zu der Lenkeinheit verlagerbare wenigstens eine Verbindungsabschnitt eine vorbestimmte Anzahl einzunehmender Stellungen aufweist, zum Beispiel zwei Endanschläge einer einem jeweiligen Verbindungsabschnitt zugeordneten Bewegungsbahn.

Dabei kann der Lenkgeber mit der Lenkeinheit über eine Kopplungseinheit verbunden sein, welche exzentrisch zu der Rotationsachse der Lenkeinheit mit der Lenkeinheit verbunden ist, wobei die Kopplungseinheit den Lenkgeber derart mit der Lenkeinheit verbinden kann, dass eine Verlagerung des Lenkgebers relativ zu dem Fahrzeugrahmen des Schwerlastfahrzeugs eine Rotation der Lenkeinheit relativ zu dem Fahrzeugrahmen des Schwerlastfahrzeugs hervorruft. Die Kopplungseinheit kann an der Lenkeinheit gelenkig mit dieser verbunden sein, um eine rotatorische Verlagerung der Kopplungseinheit von einer Rotation der Lenkeinheit trennen zu können. Die Kopplungseinheit kann beispielsweise als eine Kopplungsstange ausgebildet sein, wobei vorzugsweise eine Verlagerung des Lenkgebers eine im Wesentlichen axiale Verlagerung der Kopplungseinheit hervorrufen kann, wodurch wiederum die Lenkeinheit in Rotation versetzt werden kann.

Insbesondere kann der Lenkgeber als ein um eine zu dem Fahrzeugrahmen des Schwerlastfahrzeugs ortsfeste Drehachse drehbarer und zu der Drehachse in einem im Wesentlichen unveränderbaren Abstand angeordneter Lenkaktuator ausgebildet sein, wobei der Lenkaktuator eine Schwenkachse für die mit dem Lenkaktuator verbundene Kopplungseinheit definiert. Die Drehachse des Lenkgebers kann somit von der Rotationsachse der Lenkeinheit verschieden und insbesondere dazu um einen unveränderbaren Abstand versetzt sein. Insbesondere kann die Drehachse des Lenkgebers nicht mit dem Lenkgeber zusammenfallend ausgebildet sein.

Das Schwerlastfahrzeug kann ferner eine Lenkplatte umfassen, welche dazu eingerichtet ist, relativ zu dem Fahrzeugrahmen des Schwerlastfahrzeugs um die ortsfeste Drehachse in Abhängigkeit von einem Lenkwinkel des Schwerlastfahrzeugs rotiert zu werden, wobei der Lenkaktuator mit der Lenkplatte exzentrisch zu der Drehachse der Lenkplatte verbunden ist. Die Lenkplatte, welche zum Beispiel mit einem relativ zu dem Fahrzeugrahmen des Schwerlastfahrzeugs schwenkbaren ersten Fahrzeugteil drehfest verbunden ist, kann bei einer Rotation des ersten Fahrzeugteils relativ zu dem Fahrzeugrahmen des Schwerlastfahrzeugs zusammen mit dem ersten Fahrzeugteil, also in einer gleichen Weise relativ zu dem Fahrzeugrahmen des Schwerlastfahrzeugs, rotieren. Diese Rotation der Lenkplatte kann den Lenkaktuator veranlassen, relativ zu dem Fahrzeugrahmen des Schwerlastfahrzeugs um den gleichen Winkel wie die Lenkplatte zu rotieren. Der Lenkaktuator kann hierfür als ein mit der Lenkplatte orts- und drehfest verbundener Stab ausgebildet sein, um welchen die Kopplungseinheit schwenkbar an ihrer der Lenkeinheit abgewandten Seite gelagert ist.

Erfindungsgemäß umfasst das Schwerlastfahrzeug eine weitere Lenkeinrichtung, und die Lenkeinheit ist sowohl mit der einen Lenkeinrichtung als auch mit der weiteren Lenkeinrichtung verbunden, wobei die längenveränderbare Stelleinheit der Lenkeinheit dazu eingerichtet ist, wenigstens einen der einen Lenkeinrichtung zugeordneten Verbindungsabschnitt, insbesondere alle der einen Lenkeinrichtung zugeordnete Verbindungsabschnitte, relativ zu der Rotationsachse der Lenkeinheit zu verlagern. Es ist daher durch die vorliegende Erfindung möglich, über eine einzelne Verlagerung des Lenkgebers zwei, beispielsweise voneinander unabhängige, Lenkeinrichtungen zu betätigen. Dabei kann die der einen Lenkeinrichtung zugeordnete längenveränderbare Stelleinheit der Lenkeinheit das Übersetzungsverhältnis zwischen einem durch den Lenkgeber eingegebenen Lenkwinkel bzw. einem Rotationswinkel der Lenkeinheit zu einer Lenkung der einen Lenkeinrichtung einstellen. Das der weiteren Lenkeinrichtung zugeordnete Übersetzungsverhältnis kann unverändert verbleiben. Es ist dabei denkbar, dass die längenveränderbare Stelleinheit eine Lenkung in eine erste Richtung, zum Beispiel nach links, von einer Lenkung in eine zweite Richtung, zum Beispiel nach rechts, verschieden übersetzt. Dies kann beispielsweise durch eine längenveränderbare Stelleinheit mit wenigstens zwei längenveränderbaren Abschnitten und einer einem jeweiligem längenveränderbaren Abschnitt zugeordneten, zum Beispiel einfach oder doppelt wirkenden, Kolben-Zylinder-Anordnung realisiert werden.

Erfindungsgemäß umfasst die Lenkeinheit eine weitere längenveränderbare Stelleinheit, welche dazu eingerichtet ist, wenigstens einen der weiteren Lenkeinrichtung zugeordneten Verbindungsabschnitt, insbesondere alle der weiteren Lenkeinrichtung zugeordnete Verbindungsabschnitte, relativ zu der Rotationsachse der Lenkeinheit zu verlagern.

Wenigstens eine der längenveränderbaren Stelleinheiten der Lenkeinheit kann dazu eingerichtet sein, ein Paar von Verbindungsabschnitten relativ zu der Rotationsachse der Lenkeinheit synchron zu verlagern. Das bedeutet, dass eine Aktivierung der längenveränderbaren Stelleinheit eine gleichzeitige und insbesondere gleich weite Verlagerung des Paares von Verbindungsabschnitten relativ zu der Rotationsachse der Lenkeinheit bewirken kann. Auf diese Weise können zwei Lenkkreise einer Lenkeinrichtung, welche beispielsweise auf Grund einzuhaltender Regularien und/oder Normen vorhanden sein müssen, in einer synchronen Weise betätigt werden, um so eine gleiche Lenkwirkung der Lenkeinrichtung durch die beiden Lenkkreise zu erzielen.

Vorteilhafterweise kann eine Längenänderungsrichtung wenigstens einer, insbesondere jeder, längenveränderbaren Stelleinheit der Lenkeinheit orthogonal zu der Rotationsachse der Lenkeinheit ausgerichtet sein. Als Längenänderungsrichtung soll hier die Richtung bzw. die Achse verstanden werden, in welcher sich die wenigstens eine längenveränderbare Stelleinheit längt oder verkürzt. Eine zu der Rotationsachse der Lenkeinheit orthogonal ausgerichtete Längenänderungsrichtung kann sich insbesondere positiv auf einen benötigten Bauraum der Lenkeinheit auswirken.

Insbesondere kann wenigstens eine der längenveränderbaren Stelleinheiten als hydraulischer Zylinder bzw. Doppelzylinder oder als Spindelantrieb bzw. Doppelspindelantrieb oder als Zahnstangenantrieb oder als Lineareinheit oder als Schiebeklotzeinheit ausgebildet sein. Ein Doppelzylinder kann sowohl ein Zylinder mit einer einzelnen Kammer, in welcher zwei Kolben angeordnet sind, als auch ein Zylinder mit einer, zum Beispiel mittig, getrennten Kammer (d.h. zwei Kammern) sein, wobei in jeder Kammer jeweils ein Kolben angeordnet ist. Ein Doppelspindelantrieb kann beispielsweise ein Spindelantrieb sein, welcher eine Spindel umfasst, welche entlang eines ersten Abschnitts ein Gewinde mit einem ersten Drehsinn und entlang eines zweiten Abschnitts ein Gewinde mit einem zu dem ersten Drehsinn entgegengesetzten zweiten Drehsinn umfasst, so dass bei einer Rotation der Spindel eine auf dem ersten Abschnitt angeordnete Spindelmutter entgegengesetzt zu einer auf dem zweiten Abschnitt angeordneten Spindelmutter verlagert wird. In diesem Beispiel können die Verbindungsabschnitte mit den Spindelmuttern verbunden sein, um deren Verlagerung zu bewirken. Obwohl sich bei einem solchen Antrieb die Spindel lediglich dreht, so dass die Spindelmutter darauf verlagert wird, wird ein derartiger Antrieb ebenfalls als "längenveränderbar" angesehen, da die beiden mit übergeordneten Baugruppen verbundenen Abschnitte des Antriebs zueinander verlagert werden.

Bei dem Zahnstangenantrieb kann ein, beispielsweise um eine parallel zu der Rotationsachse der Lenkeinheit drehendes, Zahnrad an zwei Seiten mit Zahnstangen im Eingriff stehen, welche wiederum jeweils einem Verbindungsabschnitt zugeordnet sind, um diesen bei einer Betätigung des Zahnrads zu verlagern.

Insbesondere der Doppelspindelantrieb und der Zahnstangenantrieb können einen zwangsgekoppelten Gleichlauf der durch den Antrieb verlagerbaren Verbindungsabschnitte ermöglichen.

Die Schiebeklotzeinheit kann einen Schiebeklotz umfassen, welcher zum Beispiel dazu eingerichtet ist, in vorbestimmte Endlagen einer Bewegungsbahn verlagerbar zu sein. Hierdurch kann eine gestufte Verlagerung der Verbindungsabschnitte ermöglicht werden.

Die Lenkplatte kann ferner einen Königszapfen sowie einen Lenkkeil umfassen, welche dazu eingerichtet sind, mit einer übergeordneten Baugruppe, insbesondere einer Sattelzugmaschine, welche nicht Teil des Schwerlastfahrzeugs ist, drehfest einzugreifen, wobei insbesondere die Drehachse der Lenkplatte mit einer Mittelachse des Königszapfens im Wesentlichen koaxial sein kann. Wird das erfindungsgemäße Schwerlastfahrzeug zum Beispiel mit einer Sattelzugmaschine kombiniert, ist es üblich, dass die Sattelzugmaschine eine Sattelkupplung aufweist, mit welcher das erfindungsgemäße Schwerlastfahrzeug eingreifen soll. Als Gegenstück zur Sattelkupplung werden üblicherweise Königszapfen verwendet, wobei dabei das Schwerlastfahrzeug relativ zur Sattelzugmaschine drehbar bleibt. Um diese Drehung zu vermeiden, wird vorgeschlagen, dass ferner ein Lenkkeil des Schwerlastfahrzeugs mit der Sattelkupplung der Sattelzugmaschine eingreift, beispielsweise in eine sich aufweitende Öffnung, über welche der Königszapfen in seine Endposition geführt wird. Sind Königszapfen und Lenkkeil im Eingriff mit der Sattelkupplung, wird eine Lenkung der Sattelzugmaschine über den Königszapfen und den Lenkkeil an die Lenkplatte übertragen. Die Lenkplatte, welche relativ zu dem Fahrzeugrahmen des Schwerlastfahrzeugs um die ortsfeste Drehachse rotierbar gelagert ist, kann so eine Lenkung der Sattelzugmaschine an den Lenkgeber (bzw. den Lenkaktuator) übertragen, welcher durch seine Verlagerung eine entsprechend der Stellung des/der längenveränderbaren Stelleinheit(en) übersetzte Lenkung der Lenkeinrichtung(en) bewirkt.

Ferner kann eine Rotation der Lenkplatte relativ zu dem Fahrzeugrahmen des Schwerlastfahrzeugs um die Drehachse der Lenkplatte und eine dadurch verursachte Rotation der Lenkeinheit um die Rotationsachse der Lenkeinheit in Bezug auf ihren jeweiligen Drehsinn gleichgerichtet sein. Dies kann insbesondere dadurch erreicht werden, dass die Kopplungseinheit eine Verlagerung des Lenkgebers an einer gleichen Seite, in Bezug auf eine Ebene, welche durch die Rotationsachse der Lenkeinheit und die Drehachse des Lenkgebers verläuft, sowohl vom Lenkgeber aufnimmt als auch an die Lenkeinheit weitergibt. Zum Beispiel aus besonderen Platzanforderungen kann es jedoch auch denkbar sein, dass die beiden ober erwähnten Drehsinne gegenläufig sind.

Vorteilhafterweise kann die wenigstens eine längenveränderbare Stelleinheit der Lenkeinheit, in einer Richtung orthogonal zu der Drehachse der Lenkplatte gesehen, außerhalb der Lenkplatte angeordnet sein. Im Falle einer als Kreisscheibe ausgebildeten Lenkplatte kann eine Richtung orthogonal zu der Drehachse der Lenkplatte einer radialen Richtung der Lenkplatte entsprechen. Eine Anordnung der Lenkeinheit außerhalb der Lenkplatte kann einen Schutz der Lenkeinheit gegenüber Beschädigungen fördern, da die Lenkeinheit an sich, das heißt die Lenkeinheit zusammen mit ihrer Rotationsachse, nicht relativ zu dem Fahrzeugrahmen des Schwerlastfahrzeugs rotiert wird. Ferner kann so ein Konflikt mit anderen rotierenden Teilen, welche an dem Fahrzeugrahmen des Schwerlastfahrzeugs angeordnet sind, reduziert bzw. vermieden werden.

In einer Weiterbildung der vorliegenden Erfindung kann wenigstens eine Lenkeinrichtung, mit welcher die Lenkeinheit verbunden ist, einen hydraulischen Kreislauf umfassen, und wenigstens einer der dieser Lenkeinrichtung zugeordneten Verbindungsabschnitte kann mit einer Kolben-Zylinder-Anordnung verbunden sein, wobei die Kolben-Zylinder-Anordnung derart angeordnet sein kann, dass eine Rotation der Lenkeinheit um die Rotationsachse der Lenkeinheit eine relative Verlagerung von Kolben und Zylinder der Kolben-Zylinder-Anordnung hervorruft, wodurch der hydraulische Kreislauf dieser Lenkeinrichtung betätigbar ist. Eine Verwendung von Kolben-Zylinder-Anordnungen an den Verbindungsabschnitten kann eine platzsparende Möglichkeit sein, um eine Rotation der Lenkeinheit an eine Lenkeinrichtung zu übertragen.

Dabei kann die Verlagerung von Kolben und Zylinder der an der Lenkeinheit angeordneten Kolben-Zylinder-Anordnung ein in dem Zylinder der Kolben-Zylinder-Anordnung vorhandenes Fluid aus dem Zylinder heraus in eine Fluidleitung verdrängen oder aus der Fluidleitung in den Zylinder einsaugen, wobei eine mit der entsprechenden Kolben-Zylinder-Anordnung über die Fluidleitung verbundene weitere Kolben-Zylinder-Anordnung veranlasst werden kann, eine zu der an der Lenkeinheit angeordneten Kolben-Zylinder-Anordnung gekoppelte relative Verlagerung von Kolben und Zylinder der weiteren Kolben-Zylinder-Anordnung durchzuführen. Wird beispielsweise aufgrund einer Rotation der Lenkeinheit, und einer damit verbundenen Verlagerung des Kolbens in dem Zylinder der dort angeordneten Kolben-Zylinder-Anordnung, Fluid aus dem Zylinder heraus verlagert, so wird die selbe Menge Fluid in den Zylinder der weiteren Kolben-Zylinder-Anordnung hinein verlagert, wodurch der Kolben und eine mit diesem verbundene Lenkeinrichtung betätigt wird. Für den Fall, dass die Innendurchmesser der Zylinder der an der Lenkeinheit angeordneten Kolben-Zylinder-Anordnung und der weiteren Kolben-Zylinder-Anordnung zueinander gleich sind, können auch die Verlagerungswege der jeweiligen Kolben gleich sein.

Ferner können jeder Lenkeinrichtung zwei Kolben-Zylinder-Anordnungen zugeordnet sein, von welchen jeweils eine an einem aus beiderseits zu einer Mittelebene, welche durch die Rotationsachse der Lenkeinheit verläuft, insbesondere symmetrisch, angeordneten Verbindungsabschnitten mit der Lenkeinheit verbunden ist. Wie bereits weiter oben erwähnt, kann es, beispielsweise auf Grund einzuhaltender Regularien und/oder Normen, erforderlich sein, dass jede Lenkeinrichtung in einer redundanten Weise betätigt wird. Dies kann zum Beispiel durch zwei Lenkkreise einer Lenkeinrichtung erreicht werden, welche in einer synchronen Weise betätigt werden, um so eine gleiche Lenkwirkung der Lenkeinrichtung durch die beiden Lenkkreise zu erzielen. Hierbei kann bei einer Rotation der Lenkeinheit die Kolben-Zylinder-Anordnung an einer Seite der Mittelebene eingeschoben werden (das heißt Fluid wird aus dem Zylinder ausgestoßen), wohingegen die Kolben-Zylinder-Anordnung an der anderen Seite der Mittelebene ausgeschoben werden kann (das heißt, Fluid wird in den Zylinder eingesaugt). Wie voranstehend bereits beschrieben, bewirkt ein derartiges Einschieben bzw. Ausschieben der Kolben-Zylinder-Anordnungen, für den Fall, dass die Kolben-Zylinder-Anordnungen in Bezug auf Ihre Ausschubrichtung entgegengesetzt angeordnet sind, eine entsprechend gegensätzliche Betätigung der jeweiligen weiteren Kolben-Zylinder-Anordnungen. Die Mittelebene teilt hier die Lenkeinheit im Wesentlichen symmetrisch in zwei Hälften in Bezug zu der Rotationsachse der Lenkeinheit, das heißt, die Mittelebene kann auch als Symmetrieebene der Verbindungsabschnitte angesehen werden.

Dabei können jeweilige der Lenkeinheit entgegengesetzte Enden der Kolben-Zylinder-Anordnungen an einer gleichen Seite der Ebene um eine gemeinsame Achse drehbar gelagert sein, welche insbesondere zu der Rotationsachse der Lenkeinheit im Wesentlichen parallel ist. Hierdurch kann es auf einfache Weise ermöglicht werden, dass eine Stellung der an der Lenkeinheit angeordneten Kolben-Zylinder-Anordnungen angenommen wird, in welcher alle Lenkeinrichtungen gleich übersetzt sind.

Nachzutragen sei noch, dass das Schwerlastfahrzeug ferner eine Sensorik umfassen kann, welche dazu eingerichtet ist, einen Lenkwinkel des Schwerlastfahrzeugs zu erfassen. So kann die Sensorik beispielsweise dazu eingerichtet sein, zu erfassen, wenn ein Fahrer des Schwerlastfahrzeugs in eine Kurve einlenkt. Da dabei ein als Anhänger ausgebildetes erfindungsgemäßes Schwerlastfahrzeug zu diesem Zeitpunkt noch nicht in die Kurve einfährt und für eine bestimmte Distanz bis zur Kurve daher weiter geradeaus fahren soll, kann eine mit der Sensorik verbundene Regel-/Steuereinheit die wenigstens eine längenveränderbare Stelleinheit derart betätigen, dass eine relative Rotation zwischen Zugmaschine und Anhänger keine Betätigung der Lenkeinrichtungen des Anhängers hervorruft. In anderen Worten kann die relative Rotation zwischen Zugmaschine und Anhänger durch die längenveränderbare Stelleinheit bzw. die längenveränderbaren Stelleinheiten kompensiert werden.

Die Sensorik des Schwerlastfahrzeugs kann dabei ferner dazu eingerichtet sein, beispielsweise auf Grundlage einer bekannten Länge des Schwerlastfahrzeugs und einer bekannten Geschwindigkeit des Schwerlastfahrzeugs, zu bestimmen, zu welchem Zeitpunkt das hier als Anhänger ausgebildete erfindungsgemäße Schwerlastfahrzeug in die Kurve einfährt. Zu diesem Zeitpunkt kann die Regel-/Steuereinheit die längenveränderbare Stelleinheit derart betätigen, dass die Lenkeinrichtung(en) des Anhängers gemäß dem Radius der Kurve betätigt werden, wobei insbesondere das Lenkrad der Zugmaschine bzw. ein Rotationswinkel zwischen Zugmaschine und Anhänger unverändert verbleibt.

Analoges kann natürlich für ein Ausfahren aus der Kurve gelten, bei welchem der Fahrer der Zugmaschine die Lenkung der Zugmaschine auf eine Fahrt geradeaus einstellt, wohingegen eine Lenkeinrichtung bzw. Lenkeinrichtungen des Anhängers noch weiter bis zum Austritt aus der Kurve auf eine Kurvenfahrt eingestellt verbleiben sollten.

Das voranstehend beschrieben Verhalten ist allgemein auch unter dem Begriff "Nachlenken" bekannt. Jedoch kann die vorliegende Erfindung ermöglichen, für das Nachlenken benötigte Mittel, zum Beispiel eine entsprechende "Lenkflasche", zu reduzieren.

Natürlich ist es ebenfalls denkbar, die durch die Lenkeinrichtungen des beispielsweise als Anhänger ausgebildeten Schwerlastfahrzeugs betätigten Räder in einer zu einer Lenkung der Räder einer Zugmaschine entgegengesetzten Richtung zu betätigen, um einen entsprechend kleineren Wendekreis ermöglichen zu können.

Im Folgenden wird die vorliegende Erfindung anhand eines Ausführungsbeispiels mit Bezug zu den begleitenden Zeichnungen näher erläutert werden. Es stellt dar:
- Figur 1: einen schematischen Aufbau eines erfindungsgemäßen Schwerlastfahrzeugs;
- Figur 2: ein Detail der Ausführungsform des erfindungsgemäßen Schwerlastfahrzeugs gemäß Figur 1 in einer perspektivischen Ansicht;
- Figur 3: das Detail aus Figur 2 in einer weiteren perspektivischen Ansicht;
- Figur 4: eine weitere Ausführungsform des Details aus Figur 2;
- Figur 5: einen Abschnitt, insbesondere einen hinteren Anschnitt, des erfindungsgemäßen Schwerlastfahrzeugs;
- Figur 6: eine weitere Ausführungsform eines Abschnitts, insbesondere eines hinteren Anschnitts, des erfindungsgemäßen Schwerlastfahrzeugs.

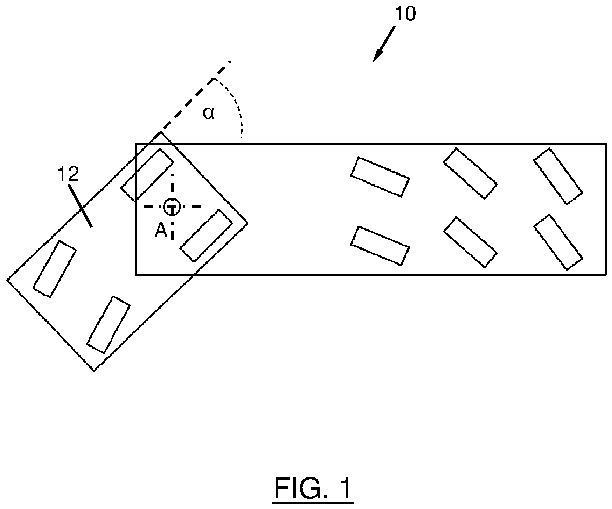

In Figur 1 ist ein erfindungsgemäßes Schwerlastfahrzeug allgemein mit dem Bezugszeichen 10 bezeichnet. Das Schwerlastfahrzeug 10 ist hier als ein Sattelauflieger ausgebildet, welcher mit einer Sattelzugmaschine 12, welche keinen Teil der Erfindung bildet, verbunden ist. Die Sattelzugmaschine 12 ist relativ zu dem Sattelauflieger 10 um eine Drehachse A, an welcher die Sattelzugmaschine 12 mit dem Sattelauflieger 10 verbunden ist, um einen Winkel α rotiert.

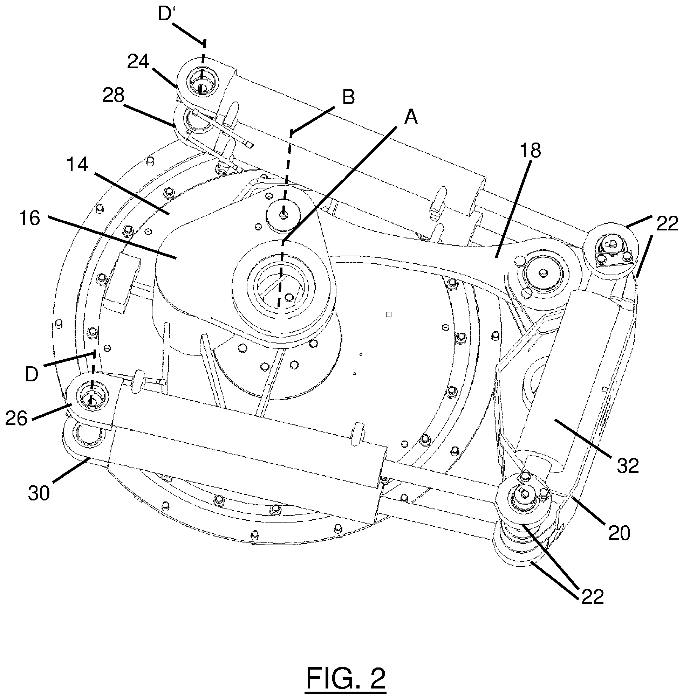

In Figur 2 ist nun detailliert dargestellt, wie eine Lenkung der Sattelzugmaschine 12 auf den Sattelauflieger 10 übertragen wird.

In dem hier dargestellten Ausführungsbeispiel umfasst der Sattelauflieger 10 eine Lenkplatte 14, welche an dem Sattelauflieger 10 um die Drehachse A drehbar gelagert ist. Dabei ist die Lenkplatte 14 mit der Sattelzugmaschine 12 drehfest verbunden.

An der Lenkplatte 14 ist ein Lenkgeber 16 angeordnet. Der Lenkgeber 16, welcher hier als Lenkaktuator 16 ausgebildet ist, ist in einem zu der Drehachse A festen Abstand angeordnet. An dem Lenkgeber 16 und um diesen um eine Schwenkachse B schwenkbar ist eine Kopplungseinheit 18 angeordnet, welche hier als eine Kopplungsstange 18 ausgebildet ist. An dem dem Lenkgeber 16 entgegengesetzten Ende der Kopplungseinheit 18 ist diese mit einer Lenkeinheit 20 ebenfalls schwenkbar verbunden.

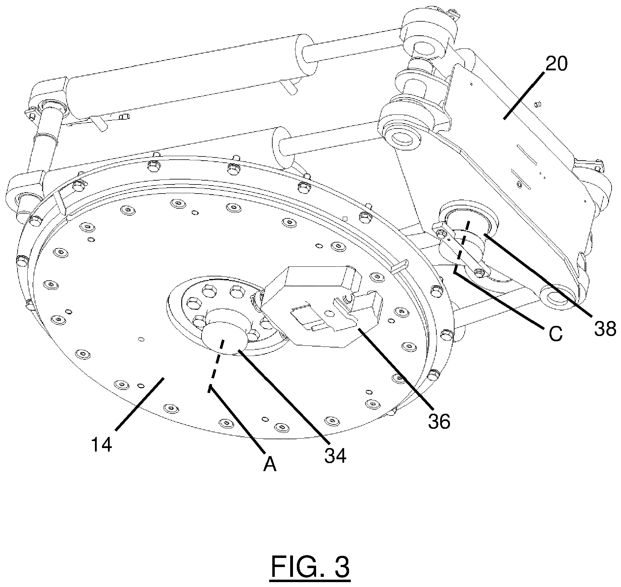

Die Lenkeinheit 20 ist mit Schwerlastfahrzeug 10 bzw. dessen Fahrzeugrahmen ortsfest aber um eine Rotationsachse C (siehe Figur 3) rotierbar verbunden. Das bedeutet ein Abstand zwischen der Drehachse A und der Rotationsachse C ist unveränderbar.

Auf eine Rotation der Lenkplatte 14 um die Drehachse A hin wird die Kopplungseinheit 18 zusammen mit dem Lenkaktuator 16 verlagert, wodurch die Lenkeinheit 20 in eine Rotation um die Rotationsachse C versetzt wird.

An ihren äußeren Enden weist die Lenkeinheit 20 Verbindungsabschnitte 22 auf, an welchen die Lenkeinheit 20 mit Kolben-Zylinder-Anordnungen 24, 26, 28 und 30 gelenkig verbunden ist. Die Kolben-Zylinder-Anordnungen 24, 26, 28 und 30 sind an ihren der Lenkeinheit 20 entgegengesetzten Enden um eine jeweilige gemeinsame Schwenkachse D bzw. D' mit dem Schwerlastfahrzeug 10 verbunden. Somit bewirkt eine Rotation der Lenkeinheit 20 um die Rotationsachse C, dass die an der einen Seite der Lenkeinheit 20 angeordneten Kolben-Zylinder-Anordnungen 24 und 28 beispielsweise ausgefahren werden, das heißt die mit den Verbindungsabschnitten 22 verbundenen Kolbenstangen aus ihren jeweiligen Zylindern verlagert werden, wohingegen die Kolben-Zylinder-Anordnungen 26 und 30 eingefahren werden. In dem gezeigten Ausführungsbeispiel sind die Kolben-Zylinder-Anordnungen als doppelt wirkende hydraulische Zylinder ausgebildet.

Die Lenkeinheit 20 umfasst hier eine längenveränderbare Stelleinheit 32, welche dazu eingerichtet ist, die mit ihr verbundenen Verbindungsabschnitte 22 von der Rotationsachse C weg oder auf diese zu zu verlagern, das heißt einen jeweiligen Abstand der mit der längenveränderbaren Stelleinheit 32 verbundenen Verbindungsabschnitte 22 zu der Rotationsachse C zu verändern.

Je nach eingestelltem Abstand der Verbindungsabschnitte 22 zu der Rotationsachse C ändert sich der Hebel der Lenkeinheit 20 auf die Kolben-Zylinder-Anordnungen 24 bis 30. In anderen Worten kann über den Abstand der Verbindungsabschnitte 22 zu der Rotationsachse C ein Verhältnis eingestellt werden, um welchen Weg ein Kolben einer jeweiligen Kolben-Zylinder-Anordnung bei einem bestimmten Rotationswinkel der Lenkeinheit 20 verlagert wird. Da eine Änderung der Fluidmenge, welche in einer entsprechenden Kammer einer jeweiligen Kolben-Zylinder-Anordnung 24 bis 30 vorhanden ist, eine proportionale Betätigung einer zugeordneten Lenkeinrichtung bewirkt, kann über das voranstehend erwähnte Verhältnis ein Übersetzungsverhältnis des Winkels α zwischen Sattelzugmaschine 12 und Sattelauflieger 10 zu einem Ausmaß einer Betätigung der der längenveränderbaren Stelleinheit 32 zugeordneten Lenkeinrichtung eingestellt werden.

In dem in Figur 2 dargestellten Ausführungsbeispiel sind die Kolben-Zylinder-Anordnungen 24 und 26 einer ersten Lenkeinrichtung des Schwerlastfahrzeugs 10 und die Kolben-Zylinder-Anordnungen 28 und 30 einer zweiten Lenkeinrichtung des Schwerlastfahrzeugs 10 zugeordnet, wobei ferner in dem in Figur 2 dargestellten Ausführungsbeispiel lediglich der ersten Lenkeinrichtung eine längenveränderbare Stelleinheit 32 zugeordnet ist, so dass nur die erste Lenkeinrichtung des Schwerlastfahrzeugs 10 eine Lenkeinrichtung mit einem einstellbaren Übersetzungsverhältnis umfasst.

Die Anordnung von zwei Kolben-Zylinder-Anordnungen 24, 26 bzw. 28, 30 für jeweils eine einzelne Lenkeinrichtung ist hier entsprechenden Vorschriften geschuldet, welche beispielsweise im deutschen Straßenverkehr einzuhalten sind. Selbstverständlich könnte eine gleiche Wirkung auch lediglich unter Verwendung der Kolben-Zylinder-Anordnungen 24 und 28 bzw. 26 und 30 (oder auch 24 und 30 bzw. 26 und 28) erreicht werden.

In Figur 3 ist die in Figur 2 gezeigte Anordnung in einer perspektivischen Ansicht von unten dargestellt. Dabei zu erkennen, dass die Lenkplatte 14 an ihrer Unterseite, zentriert zu der Drehachse A, einen Königszapfen 34 und einen mit der Unterseite der Lenkplatte 14 fest verbundenen Lenkkeil 36 aufweist. Über einen Eingriff des Königszapfens 34 und des Lenkkeils 36 mit beispielsweise einer nicht dargestellten Sattelkupplung kann die Lenkplatte 14 drehfest mit dieser Sattelkupplung verbunden werden.

Ferner ist in Figur 3 ein Zapfen 38 zu erkennen, welcher an der in Figur 3 dargestellten unteren Seite mit einem Fahrzeugrahmen des Schwerlastfahrzeugs 10 über eine Verschraubung verbindbar ist, und welcher die Rotationsachse C definiert, um welche die Lenkeinheit 20 rotieren kann.

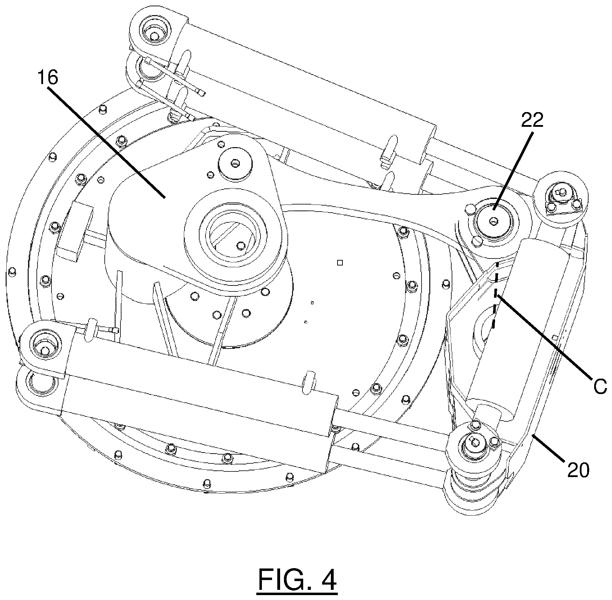

In Figur 4 ist eine alternative oder zusätzliche Anordnung eines Verbindungsabschnitts 22 gezeigt. In der in Figur 4 dargestellten Ausführungsform, obwohl hier die Stelleinheiten 32 der Ausführungsform gemäß Figuren 2 und 3 weiterhin gezeigt sind, kann der Verbindungsabschnitt 22, an welchem der Lenkgeber 16 bzw. die Kopplungseinheit 18, welche mit dem Lenkgeber 16 verbunden ist, relativ zu Rotationsachse C der Lenkeinheit 20 derart verlagert werden, dass ein Übersetzungsverhältnis einer Rotation der Lenkplatte 14 um die Drehachse A zu einer Rotation der Lenkeinheit 20 um die Rotationsachse C verändert wird.

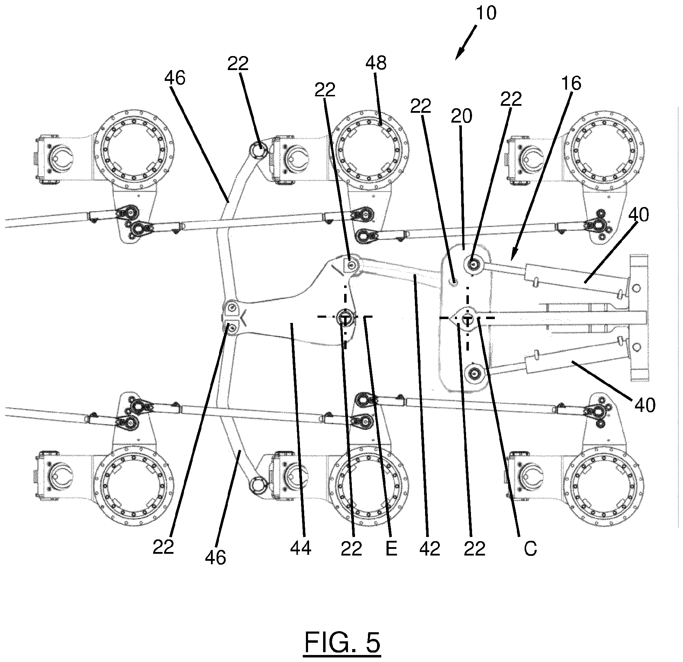

In Figur 5 ist ein Abschnitt, insbesondere ein hinterer Anschnitt, eines erfindungsgemäßen Schwerlastfahrzeugs 10 dargestellt, wobei hier als Lenkgeber 16 zwei Kolben-Zylinder-Anordnungen 40 dazu dienen, eine Kraft auf die Lenkeinheit 20 auszuüben, um die Lenkeinheit 20 um die Rotationsachse C zu rotieren. Die beiden Kolben-Zylinder-Anordnungen 40 sind hier in einer redundanten Weise ausgeführt und es ist ebenfalls denkbar, nur eine Kolben-Zylinder-Anordnung 40 vorzusehen.

Die Lenkeinheit 20 ist in Figur 5 über eine Verbindungsstange 42 mit einem Schwenkhebel 44 verbunden, welcher um eine Rotationsachse E an dem Fahrzeugrahmen des Schwerlastfahrzeugs 10 gelagert ist. Mit dem Schwenkhebel 44 sind wiederum zwei Lenkstangen 46 verbunden, welche jeweils derart mit einem Drehteller 48 einer jeweiligen Radbaugruppe, umfassend wenigstens ein Rad, (nicht dargestellt) gekoppelt sind, dass eine Verlagerung einer Lenkstange 46, insbesondere im Wesentlichen in Fahrzeugbreitenrichtung, eine Rotation der Radbaugruppe relativ zu dem Fahrzeugrahmen des Schwerlastfahrzeugs 10 hervorruft. Dabei kann der Begriff "Drehteller" gleichermaßen auf einen Drehteller einer Pendelachse als auch auf einen Lenkschenkel einer Lenkschenkelachse anwendbar sein.

Um nun den erfinderischen Grundgedanken umzusetzen, ein Übersetzungsverhältnis zwischen einer durch einen jeweiligen Lenkgeber 16 eingegebenen Kraft bzw. Verlagerungsstrecke und einer an eine jeweilige Radbaugruppe ausgegebenen Kraft bzw. Verlagerungsstrecke einzustellen, kann eine längenveränderbare Stelleinheit 32 an einem Verbindungsabschnitt 22 zwischen dem Lenkgeber 16, das heißt in Figur 5 wenigstens einer der Kolben-Zylinder-Anordnungen 40, und der Lenkeinheit 20 und/oder einem Verbindungsabschnitt 22 zwischen der Lenkeinheit 20 und einer Lagerung um die Rotationsachse C und/oder einem Verbindungsabschnitt 22 zwischen der Lenkeinheit 20 und der Verbindungsstange 42 und/oder einem Verbindungsabschnitt 22 zwischen der Verbindungsstange 42 und dem Schwenkhebel 44 und/oder einem Verbindungsabschnitt 22 zwischen dem Schwenkhebel 44 und einer Lagerung um die Rotationsachse E und/oder einem Verbindungsabschnitt 22 zwischen dem Schwenkhebel 44 und einer Lenkstange 46 und/oder einem Verbindungsabschnitt 22 zwischen einer Lenkstange 46 und der Radbaugruppe bzw. dem Drehteller 48 oder einem damit verbundenen Element angeordnet sein.

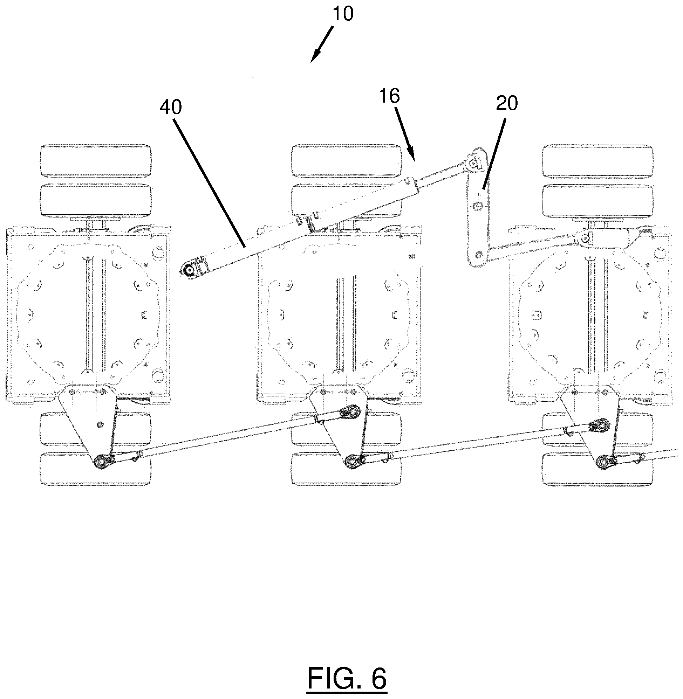

Bei der in Figur 6 dargestellten Ausführungsform des Schwerlastfahrzeugs 10 ist die Lenkeinheit 20 in der Fahrzeugbreitenrichtung des Schwerlastfahrzeugs 10 von einer Mitte versetzt angeordnet. In Bezug auf die Merkmale und Wirkungsweise sowie die möglichen Anordnungen eines Verbindungsabschnitts 22 der in Figur 6 dargestellten Ausführungsform sei an dieser Stelle auf die oben beschriebenen Ausführungsformen verwiesen. Der Lenkgeber 16 ist in der Ausführungsform gemäß Figur 6 ebenfalls als Kolben-Zylinder-Anordnung 40 ausgebildet.

Schwerlastfahrzeugs 10 von einer Mitte versetzt angeordnet. In Bezug auf die Merkmale und Wirkungsweise sowie die möglichen Anordnungen eines Verbindungsabschnitts 22 der in Figur 6 dargestellten Ausführungsform sei an dieser Stelle auf die oben beschriebenen Ausführungsformen verwiesen. Der Lenkgeber 16 ist in der Ausführungsform gemäß Figur 6 ebenfalls als Kolben-Zylinder-Anordnung 40 ausgebildet.

## Patentansprüche

1. Schwerlastfahrzeug (10), umfassend
eine Lenkeinheit (20), welche an einem Fahrzeugrahmen des Schwerlastfahrzeugs (10) um eine Rotationsachse (C) drehbar gelagert ist, und welche wenigstens einen Verbindungsabschnitt (22) aufweist, welcher dazu eingerichtet ist, mit einer Lenkeinrichtung und/oder einem Lenkgeber (16) des Schwerlastfahrzeugs (10) verbunden zu werden, und
den Lenkgeber (16), welcher mit der Lenkeinheit (20) verbunden ist und dazu eingerichtet ist, eine Rotation der Lenkeinheit (20) um ihre Rotationsachse (C) hervorzurufen,
wobei die Lenkeinheit (20) wenigstens eine längenveränderbare Stelleinheit (32) umfasst, welche dazu eingerichtet ist, einen Abstand von wenigstens einem Verbindungsabschnitt (22) relativ zu der Rotationsachse (C) der Lenkeinheit (20) zu verändern,
wobei das Schwerlastfahrzeug (10) eine weitere Lenkeinrichtung umfasst,
wobei die Lenkeinheit (20) sowohl mit der einen Lenkeinrichtung als auch mit der weiteren Lenkeinrichtung verbunden ist, und
wobei die längenveränderbare Stelleinheit (32) der Lenkeinheit (20) dazu eingerichtet ist, wenigstens einen der einen Lenkeinrichtung zugeordneten Verbindungsabschnitt (22) relativ zu der Rotationsachse (C) der Lenkeinheit (20) zu verlagern,
**dadurch gekennzeichnet,**
**dass** die Lenkeinheit (20) eine weitere längenveränderbare Stelleinheit (32) umfasst, welche dazu eingerichtet ist, wenigstens einen der weiteren Lenkeinrichtung zugeordneten Verbindungsabschnitt (22) relativ zu der Rotationsachse (C) der Lenkeinheit (20) zu verlagern.

2. Schwerlastfahrzeug (10) nach Anspruch 1,
**dadurch gekennzeichnet, dass** der Lenkgeber (16) mit der Lenkeinheit (20) über eine Kopplungseinheit (18) verbunden ist, welche exzentrisch zu der Rotationsachse (C) der Lenkeinheit (20) mit der Lenkeinheit (20) verbunden ist, wobei die Kopplungseinheit (18) den Lenkgeber (16) derart mit der Lenkeinheit (20) verbindet, dass eine Verlagerung des Lenkgebers (16) relativ zu dem Fahrzeugrahmen des Schwerlastfahrzeugs (10) eine Rotation der Lenkeinheit (20) relativ zu dem Fahrzeugrahmen des Schwerlastfahrzeugs (10) hervorruft.

3. Schwerlastfahrzeug (10) nach Anspruch 2,
**dadurch gekennzeichnet, dass** der Lenkgeber (16) als ein um eine zu dem Fahrzeugrahmen des Schwerlastfahrzeugs (10) ortsfeste Drehachse (A) drehbarer und zu der Drehachse (A) in einem im Wesentlichen unveränderbaren Abstand angeordneter Lenkaktuator (16) ausgebildet ist, wobei der Lenkaktuator (16) eine Schwenkachse (B) für die mit dem Lenkaktuator (16) verbundene Kopplungseinheit (18) definiert.

4. Schwerlastfahrzeug (10) nach Anspruch 3,
**dadurch gekennzeichnet, dass** das Schwerlastfahrzeug (10) ferner eine Lenkplatte (14) umfasst, welche dazu eingerichtet ist, relativ zu dem Fahrzeugrahmen des Schwerlastfahrzeugs (10) um die ortsfeste Drehachse (A) in Abhängigkeit von einem Lenkwinkel (α) des Schwerlastfahrzeugs (10) rotiert zu werden, wobei der Lenkaktuator (16) mit der Lenkplatte (14) exzentrisch zu der Drehachse (A) der Lenkplatte (14) verbunden ist.

5. Schwerlastfahrzeug (10) nach einem der Ansprüche 1 bis 4,
**dadurch gekennzeichnet, dass** die längenveränderbare Stelleinheit (32) der Lenkeinheit (20) dazu eingerichtet ist, alle der einen Lenkeinrichtung zugeordneten Verbindungsabschnitte (22), relativ zu der Rotationsachse (C) der Lenkeinheit (20) zu verlagern.

6. Schwerlastfahrzeug (10) nach Anspruch 5,
**dadurch gekennzeichnet, dass** die Lenkeinheit (20) eine weitere längenveränderbare Stelleinheit (32) umfasst, welche dazu eingerichtet ist, alle der weiteren Lenkeinrichtung zugeordneten Verbindungsabschnitte (22), relativ zu der Rotationsachse (C) der Lenkeinheit (20) zu verlagern.

7. Schwerlastfahrzeug (10) nach einem der Ansprüche 1 bis 6,
**dadurch gekennzeichnet, dass** wenigstens eine der längenveränderbaren Stelleinheiten (32) der Lenkeinheit (20) dazu eingerichtet ist, ein Paar von Verbindungsabschnitten (22) relativ zu der Rotationsachse (C) der Lenkeinheit (20) synchron zu verlagern.

8. Schwerlastfahrzeug (10) nach einem der Ansprüche 1 bis 7,
**dadurch gekennzeichnet, dass** eine Längenänderungsrichtung wenigstens einer, insbesondere jeder, längenveränderbaren Stelleinheit (32) der Lenkeinheit (20) orthogonal zu der Rotationsachse (C) der Lenkeinheit (20) ausgerichtet ist.

9. Schwerlastfahrzeug (10) nach einem der Ansprüche 1 bis 8,
**dadurch gekennzeichnet, dass** wenigstens eine der längenveränderbaren Stelleinheiten (32) als hydraulischer Zylinder bzw. Doppelzylinder oder als Spindelantrieb bzw. Doppelspindelantrieb oder als Zahnstangenantrieb oder als Lineareinheit oder als Schiebeklotzeinheit ausgebildet ist.

10. Schwerlastfahrzeug (10) nach einem der Ansprüche 1 bis 9, wenn abhängig von Anspruch 4,
**dadurch gekennzeichnet, dass** die Lenkplatte (14) einen Königszapfen sowie einen Lenkkeil umfasst, welche dazu eingerichtet sind, mit einer übergeordneten Baugruppe, insbesondere einer Sattelzugmaschine (12), welche nicht Teil des Schwerlastfahrzeugs (10) ist, drehfest einzugreifen, wobei insbesondere die Drehachse (A) der Lenkplatte (14) mit einer Mittelachse des Königszapfens im Wesentlichen koaxial ist.

11. Schwerlastfahrzeug (10) nach einem der Ansprüche 1 bis 10, wenn abhängig von Anspruch 4,
**dadurch gekennzeichnet, dass** eine Rotation der Lenkplatte (14) relativ zu dem Fahrzeugrahmen des Schwerlastfahrzeugs (10) um die Drehachse (A) der Lenkplatte (14) und eine dadurch verursachte Rotation der Lenkeinheit (20) um die Rotationsachse (C) der Lenkeinheit (20) in Bezug auf ihren jeweiligen Drehsinn gleichgerichtet sind.

12. Schwerlastfahrzeug (10) nach einem der Ansprüche 1 bis 11, wenn abhängig von Anspruch 4,
**dadurch gekennzeichnet, dass** die wenigstens eine längenveränderbare Stelleinheit (32) der Lenkeinheit (20), in einer Richtung orthogonal zu der Drehachse (A) der Lenkplatte (14) gesehen, außerhalb der Lenkplatte (14) angeordnet ist.

13. Schwerlastfahrzeug (10) nach einem der Ansprüche 1 bis 12,
**dadurch gekennzeichnet, dass** wenigstens eine Lenkeinrichtung, mit welcher die Lenkeinheit (20) verbunden ist, einen hydraulischen Kreislauf umfasst, und dass wenigstens einer der dieser Lenkeinrichtung zugeordneten Verbindungsabschnitte (22) mit einer Kolben-Zylinder-Anordnung (24, 26, 28, 30) verbunden ist, wobei die Kolben-Zylinder-Anordnung (24, 26, 28, 30) derart angeordnet ist, dass eine Rotation der Lenkeinheit (20) um die Rotationsachse (C) der Lenkeinheit (20) eine relative Verlagerung von Kolben und Zylinder der Kolben-Zylinder-Anordnung (24, 26, 28, 30) hervorruft, wodurch der hydraulische Kreislauf dieser Lenkeinrichtung betätigbar ist.

14. Schwerlastfahrzeug (10) nach einem der Ansprüche 1 bis 13, wenn abhängig von Anspruch 4,
**dadurch gekennzeichnet, dass** jeder Lenkeinrichtung zwei Kolben-Zylinder-Anordnungen (24, 26, 28, 30) zugeordnet sind, von welchen jeweils eine an einem aus beiderseits zu einer Mittelebene, welche durch die Rotationsachse (C) der Lenkeinheit (20) verläuft, insbesondere symmetrisch, angeordneten Verbindungsabschnitten (22) mit der Lenkeinheit (20) verbunden ist.

15. Schwerlastfahrzeug (10) nach Anspruch 14,
**dadurch gekennzeichnet, dass** jeweilige der Lenkeinheit (20) entgegengesetzte Enden der Kolben-Zylinder-Anordnungen (24, 26, 28, 30) an einer gleichen Seite der Ebene um eine gemeinsame Achse (D, D') drehbar gelagert sind, welche insbesondere zu der Rotationsachse (C) der Lenkeinheit (20) im Wesentlichen parallel ist.

## Claims

1. A heavy goods vehicle (10), comprising:
a steering unit (20), which is mounted on a vehicle frame of the heavy goods vehicle (10) such that it is rotatable about an axis of rotation (C), and which has at least one connection portion (22) that is configured to be connected to a steering device and/or a steering transmitter (16) of the heavy goods vehicle (10), and
the steering transmitter (16), which is connected to the steering unit (20) and is configured to cause the steering unit (20) to rotate about its axis of rotation (C),
wherein the steering unit (20) comprises at least one adjustment unit (32), which is variable in length and is configured to vary a spacing of at least one connection portion (22) in relation to the axis of rotation (C) of the steering unit (20),
wherein the heavy goods vehicle (10) comprises a further steering device, wherein the steering unit (20) is connected to both the one steering device and the further steering device, and
wherein the variable-length adjustment unit (32) of the steering unit (20) is configured to displace at least one connection portion (22) that is associated with the one steering device, in relation to the axis of rotation (C) of the steering unit (20),
**characterised in that**
the steering unit (20) comprises a further adjustment unit (32), which is variable in length and is configured to displace at least one connection portion (22) that is associated with the further steering device, in relation to the axis of rotation (C) of the steering unit (20).

2. A heavy goods vehicle (10) according to Claim 1,
**characterised in that** the steering transmitter (16) is connected to the steering unit (20) by way of a coupling unit (18) that is connected to the steering unit (20) in a manner eccentric to the axis of rotation (C) of the steering unit (20), wherein the coupling unit (18) connects the steering transmitter (16) to the steering unit (20) such that displacement of the steering transmitter (16) in relation to the vehicle frame of the heavy goods vehicle (10) causes the steering unit (20) to rotate in relation to the vehicle frame of the heavy goods vehicle (10).

3. A heavy goods vehicle (10) according to Claim 2,
**characterised in that** the steering transmitter (16) takes the form of a steering actuator (16) which is rotatable about an axis of rotation (A) that is fixed relative to the vehicle frame of the heavy goods vehicle (10), and which is arranged at a substantially invariable spacing in relation to the axis of rotation (A), wherein the steering actuator (16) defines a pivot axis (B) for the coupling unit (18) connected to the steering actuator (16).

4. A heavy goods vehicle (10) according to Claim 3,
**characterised in that** the heavy goods vehicle (10) further comprises a steering plate (14) which is configured to be rotated in relation to the vehicle frame of the heavy goods vehicle (10) about the fixed axis of rotation (A) in a manner depending on a steering angle (α) of the heavy goods vehicle (10), wherein the steering actuator (16) is connected to the steering plate (14) in a manner eccentric to the axis of rotation (A) of the steering plate (14).

5. A heavy goods vehicle (10) according to one of Claims 1 to 4,
**characterised in that** the variable-length adjustment unit (32) of the steering unit (20) is configured to displace all the connection portions (22) that are associated with the one steering device, in relation to the axis of rotation (C) of the steering unit (20).

6. A heavy goods vehicle (10) according to Claim 5,
**characterised in that** the steering unit (20) comprises a further adjustment unit (32), which is variable in length and is configured to displace all the connection portions (22) that are associated with the further steering device, in relation to the axis of rotation (C) of the steering unit (20).

7. A heavy goods vehicle (10) according to one of Claims 1 to 6,
**characterised in that** at least one of the variable-length adjustment units (32) of the steering unit (20) is configured to synchronously displace a pair of connection portions (22) in relation to the axis of rotation (C) of the steering unit (20).

8. A heavy goods vehicle (10) according to one of Claims 1 to 7,
**characterised in that** a direction of change in length of at least one, in particular each, variable-length adjustment unit (32) of the steering unit (20) is oriented at a right angle to the axis of rotation (C) of the steering unit (20).

9. A heavy goods vehicle (10) according to one of Claims 1 to 8,
**characterised in that** at least one of the variable-length adjustment units (32) takes the form of a hydraulic cylinder or double cylinder or a spindle drive or double-spindle drive or a rack-and-pinion drive or a linear unit or a sliding block unit.

10. A heavy goods vehicle (10) according to one of Claims 1 to 9 when dependent on Claim 4,
**characterised in that** the steering plate (14) comprises a kingpin and a steering wedge that are configured to engage non-rotatably with a higherlevel assembly, in particular a tractor unit (12), that is not part of the heavy goods vehicle (10), wherein in particular the axis of rotation (A) of the steering plate (14) is substantially coaxial with a centre axis of the kingpin.

11. A heavy goods vehicle (10) according to one of Claims 1 to 10 when dependent on Claim 4,
**characterised in that** a rotation of the steering plate (14) relative to the vehicle frame of the heavy goods vehicle (10), about the axis of rotation (A) of the steering plate (14), and a rotation of the steering unit (20) caused thereby, about the axis of rotation (C) of the steering unit (20), are in the same direction of rotation.

12. A heavy goods vehicle (10) according to one of Claims 1 to 11 when dependent on Claim 4,
**characterised in that,** as seen in a direction at a right angle to the direction of rotation (A) of the steering plate (14), the at least one variable-length adjustment unit (32) of the steering unit (20) is arranged outside the steering plate (14).

13. A heavy goods vehicle (10) according to one of Claims 1 to 12,
**characterised in that** at least one steering device to which the steering unit (20) is connected comprises a hydraulic circuit, and **in that** at least one of the connection portions (22) associated with this steering device is connected to a piston-and-cylinder arrangement (24, 26, 28, 30), wherein the piston-and-cylinder arrangement (24, 26, 28, 30) is arranged such that a rotation of the steering unit (20) about the axis of rotation (C) of the steering unit (20) causes a relative displacement of the piston and cylinder of the piston-and-cylinder arrangement (24, 26, 28, 30), as a result of which the hydraulic circuit of this steering device is actuable.

14. A heavy goods vehicle (10) according to one of Claims 1 to 13 when dependent on Claim 4,
**characterised in that** associated with each steering device are two piston-and-cylinder arrangements (24, 26, 28, 30), of which a respective one is connected to the steering unit (20) at one of the connection portions (22), which are arranged on either side of a centre plane that runs through the axis of rotation (C) of the steering unit (20), in particular symmetrically.

15. A heavy goods vehicle (10) according to Claim 14,
**characterised in that** respective ends of the piston-and-cylinder arrangements (24, 26, 28, 30), which are opposite ends to the steering unit (20), are mounted on the same side of the plane such that they are rotatable about a common axis (D, D') that is substantially parallel in particular to the axis of rotation (C) of the steering unit (20).

## Revendications

1. Véhicule lourd (10), comprenant
une unité de direction (20) qui est montée sur un châssis de véhicule du véhicule lourd (10) de manière à pouvoir tourner autour d'un axe de rotation (C), et qui présente au moins une section de liaison (22) qui est adaptée pour être reliée à un dispositif de direction et/ou à un mécanisme de direction (16) du véhicule lourd (10),
et
le mécanisme de direction (16), qui est relié à l'unité de direction (20) et est adapté pour provoquer une rotation de l'unité de direction (20) autour de son axe de rotation (C),
dans lequel l'unité de direction (20) comprend au moins une unité de réglage de longueur variable (32), qui est adaptée pour modifier une distance d'au moins une section de liaison (22) par rapport à l'axe de rotation (C) de l'unité de direction (20), dans lequel le véhicule lourd (10) comprend un autre dispositif de direction, dans lequel l'unité de direction (20) est reliée à la fois au premier dispositif de direction et à l'autre dispositif de direction, et
dans lequel l'unité de réglage de longueur variable (32) de l'unité de direction (20) est adaptée pour déplacer au moins une section de liaison (22) associée au premier dispositif de direction par rapport à l'axe de rotation (C) de l'unité de direction (20),
**caractérisé en ce que**
l'unité de direction (20) comprend une autre unité de réglage de longueur variable (32), qui est adaptée pour déplacer au moins une section de liaison (22) associée à l'autre dispositif de direction par rapport à l'axe de rotation (C) de l'unité de direction (20).

2. Véhicule lourd (10) selon la revendication 1,
**caractérisé en ce que** le mécanisme de direction (16) est relié à l'unité de direction (20) par une unité de couplage (18) qui est reliée à l'unité de direction (20) de manière excentrée par rapport à l'axe de rotation (C) de l'unité de direction (20), dans lequel l'unité de couplage (18) relie le mécanisme de direction (16) à l'unité de direction (20) de telle sorte qu'un déplacement du mécanisme de direction (16) par rapport au châssis du véhicule lourd (10) provoque une rotation de l'unité de direction (20) par rapport au châssis du véhicule lourd (10).

3. Véhicule lourd (10) selon la revendication 2,
**caractérisé en ce que** le mécanisme de direction (16) est réalisé sous la forme d'un actionneur de direction (16) pouvant tourner autour d'un axe de rotation (A) fixe par rapport au châssis du véhicule lourd (10) et disposé à une distance sensiblement invariable de l'axe de rotation (A), dans lequel l'actionneur de direction (16) définit un axe de pivotement (B) pour l'unité de couplage (18) reliée à l'actionneur de direction (16).

4. Véhicule lourd (10) selon la revendication 3,
**caractérisé en ce que** le véhicule lourd (10) comprend en outre une plaque de direction (14) adaptée pour être mise en rotation par rapport au châssis du véhicule lourd (10) autour de l'axe de rotation fixe (A) en fonction d'un angle de direction (α) du véhicule lourd (10), dans lequel l'actionneur de direction (16) est relié à la plaque de direction (14) de manière excentrée par rapport à l'axe de rotation (A) de la plaque de direction (14).

5. Véhicule lourd (10) selon l'une des revendications 1 à 4,
**caractérisé en ce que** l'unité de réglage de longueur variable (32) de l'unité de direction (20) est adaptée pour déplacer toutes les sections de liaison (22) associées à l'un des dispositifs de direction, par rapport à l'axe de rotation (C) de l'unité de direction (20).

6. Véhicule lourd (10) selon la revendication 5,
**caractérisé en ce que** l'unité de direction (20) comprend une autre unité de réglage de longueur variable (32) qui est adaptée pour déplacer toutes les sections de liaison (22) associées à l'autre dispositif de direction, par rapport à l'axe de rotation (C) de l'unité de direction (20).

7. Véhicule lourd (10) selon l'une des revendications 1 à 6,
**caractérisé en ce qu'**au moins l'une des unités de réglage de longueur variable (32) de l'unité de direction (20) est adaptée pour déplacer de manière synchrone une paire de sections de liaison (22) par rapport à l'axe de rotation (C) de l'unité de direction (20).

8. Véhicule lourd (10) selon l'une des revendications 1 à 7,
**caractérisé en ce qu'**un sens de changement de longueur d'au moins une, en particulier de chaque, unité de réglage de longueur variable (32) de l'unité de direction (20) est orientée orthogonalement à l'axe de rotation (C) de l'unité de direction (20).

9. Véhicule lourd (10) selon l'une des revendications 1 à 8,
**caractérisé en ce qu'**au moins l'une des unités de réglage de longueur variable (32) est réalisée sous la forme d'un cylindre hydraulique ou d'un double cylindre ou d'un entraînement à broche ou d'un entraînement à double broche ou d'un entraînement à crémaillère ou d'une unité linéaire ou d'une unité à sabot coulissant.

10. Véhicule lourd (10) selon l'une des revendications 1 à 9, si elle dépend de la revendication 4,
**caractérisé en ce que** la plaque de direction (14) comprend un pivot central ainsi qu'une clavette de direction qui sont adaptés pour s'engager en rotation avec un ensemble supérieur, en particulier un tracteur de semi-remorque (12), qui ne fait pas partie du véhicule lourd (10), dans lequel en particulier l'axe de rotation (A) de la plaque de direction (14) est sensiblement coaxial avec un axe central du pivot central.

11. Véhicule lourd (10) selon l'une des revendications 1 à 10, si elle dépend de la revendication 4,
**caractérisé en ce qu'**une rotation de la plaque de direction (14) par rapport au châssis du véhicule lourd (10) autour de l'axe de rotation (A) de la plaque de direction (14) et une rotation de l'unité de direction (20) autour de l'axe de rotation (C) de l'unité de direction (20) qui en résulte sont de même sens par rapport à leur sens de rotation respectif.

12. Véhicule lourd (10) selon l'une des revendications 1 à 11, si elle dépend de la revendication 4,
**caractérisé en ce que** ledit au moins une unité de réglage de longueur variable (32) de l'unité de direction (20), vue dans un sens orthogonal à l'axe de rotation (A) du plateau de direction (14), est disposée à l'extérieur du plateau de direction (14).

13. Véhicule lourd (10) selon l'une des revendications 1 à 12,
**caractérisé en ce qu'**au moins un dispositif de direction auquel l'unité de direction (20) est reliée comprend un circuit hydraulique, et **en ce qu'**au moins une des sections de liaison (22) associées à ce dispositif de direction est reliée à un ensemble piston-cylindre (24, 26, 28, 30), dans lequel l'ensemble piston-cylindre (24, 26, 28, 30) est disposé de telle sorte qu'une rotation de l'unité de direction (20) autour de l'axe de rotation (C) de l'unité de direction (20) provoque un déplacement relatif du piston et du cylindre de l'ensemble piston-cylindre (24, 26, 28, 30), ce qui permet d'actionner le circuit hydraulique de ce dispositif de direction.

14. Véhicule lourd (10) selon l'une des revendications 1 à 13, si elle dépend de la revendication 4,
**caractérisé en ce qu'**à chaque dispositif de direction sont associés deux ensembles piston-cylindre (24, 26, 28, 30) dont respectivement un est relié au dispositif de direction (20) par l'une des sections de liaison (22) disposées, notamment symétriquement, de part et d'autre d'un plan médian passant par l'axe de rotation (C) du dispositif de direction (20).

15. Véhicule lourd (10) selon la revendication 14,
**caractérisé en ce que** des extrémités respectives des ensembles piston-cylindre (24, 26, 28, 30) opposées à l'unité de direction (20) sont montées rotatives d'un même côté du plan autour d'un axe commun (D, D') qui est notamment sensiblement parallèle à l'axe de rotation (C) de l'unité de direction (20).
